Europäisches Patentamt

European Patent Office

Office européen des brevets

(11) Publication number: **0 284 674 B1**

(12) **EUROPEAN PATENT SPECIFICATION**

(45) Date of publication of patent specification: **08.07.92** (51) Int. Cl.⁵: **G05B 19/41**

(21) Application number: **87302740.3**

(22) Date of filing: **30.03.87**

---

(54) **Manufacturing method and apparatus.**

---

(43) Date of publication of application:
**05.10.88 Bulletin 88/40**

(45) Publication of the grant of the patent:
**08.07.92 Bulletin 92/28**

(84) Designated Contracting States:
**DE FR GB IT LI SE**

(56) References cited:
**EP-A- 0 287 657
WO-A-80/2677
US-A- 3 576 928**

**TOOLING AND PRODUCTION, vol. 44, no. 5,
August 1978, page 7, Hueber Publication Inc.
Solon., US; "Three dimensional carving by
laser"**

(73) Proprietor: **Masters, William E.
313 Dogwood Lane
Easley South Carolina 29640(US)**

(72) Inventor: **Masters, William E.
313 Dogwood Lane
Easley South Carolina 29640(US)**

(74) Representative: **Purvis, William Michael
Cameron et al
D. Young & Co. 10 Staple Inn
London WC1V 7RD(GB)**

---

Rank Xerox (UK) Business Services

## Description

Heretofore, computer aided design (CAD) systems have been proposed. With the aid of a computer, an operator is able to design a two or three dimensional object and display the design on a screen or on paper. The computer aids in the overall design as called for by the operator according to pre-existing design parameters and computer software. One such computer aided design system is manufactured by Vector Automation of Baltimore, Maryland as CADMAX-II.

It has also been proposed to control a mechanical operation or manufacturing process by means of a computer such as in robotics. A robot or remote gripper jaw is manipulated by means of a preprogrammed computer to carry out a specific operation or task. For example, the milling of metal parts to produce a simple article by use of a computer aided milling machine has been widely applied. One such computer aided milling machine is that manufactured by the Cincinnati Milicron Company. Other examples of computer aided mechanical operations include the spray painting of objects by means of a computer controlled spry gun arm which moves a spray gun in a predetermined pattern in order repeatedly and uniformly to paint objects in an assembly line. For example, the Thermwood Corporation of Richardson, Texas manufactured a computerized industrial robot for painting called the Paintmaster.

Three-dimensional reproduction of designs from photographs and grid charts has been heretofore proposed in the fields of photo-sculpture as disclosed in Patent Specifications US-A-3 988 520 and 1 382 978, automatically to carve or mill out a three-dimensional object from a larger stock of material.

The article "three-dimensional carving by laser" in Tooling and Production, vol. no. 5, August 1978, page 7, Hueber Publication Inc. Solon., US, discloses the possibility of developing a computer controlled apparatus for projecting laser beams into a reaction chamber containing special liquid plastic or a photoactive solution of metal salts. The liquid reacts to form a solid when subject to the combination of a red and blue laser and it is suggested that by controlling the intersection of two beams, a solid sculpture could be formed from the liquid within the chamber.

Patent Specification US-A-3 576 928 discloses a method of forming articles from fibrous materials and a binder material by electrostatically charging the materials to attract them to a former or mould which is oppositely charged or earthed.

According to one aspect of the invention there is provided a method for reproducing in three dimensions an article design in two dimensions to form an article, comprising the steps of generating on a computer machine a data file of three-dimensional co-ordinates of the article design representing the three-dimensional design co-ordinate of the article design in a co-ordinate system within an environment in which the article design can be reproduced characterised by; providing an origination seed particle in the environment which serves as a nucleus for the article to be built upon in three dimensions and represents a point of origin in the co-ordinate system; providing a source of mass particles; directing particles from the source to co-ordinates around the origination seed particle in the co-ordinate system within the environment according to the three-dimensional co-ordinates of the article design on the computer machine; positioning the particles at the co-ordinates; and joining the particles to one another at the co-ordinates to build up and form the article in three dimensions about the origination seed particle.

According to another aspect of the invention there is provided a manufacturing apparatus for reproducing a physical three-dimensional article from a data file generated on a computer machine on which an article design for the article was designed in two dimensions, comprising: the data file which includes three-dimensional co-ordinate information of the design co-ordinates of the article design which corresponds to three-dimensional co-ordinates of the article to be reproduced in a three-dimensional co-ordinate system within an environment characterised by; a physical origination seed particle which serves as a nucleus for the physical article to be built upon according to co-ordinate information in the data file and is represented by a point of origin of the three-dimensional co-ordinate systems; means to locate the origination seed particle in the environment at the origin of the co-ordinate system; a source of mass particles; directional means to direct said mass particles from the source to the co-ordinates corresponding to the design of the article in the co-ordinate system within the environment; control means to control the directional means in response to the co-ordinate information in the data file; and means for physically joining the mass particles together at the co-ordinates within the environment to construct the article in three-dimensions about the origination seed particle.

Such a method and apparatus can automatically reproduce a physical three-dimensional article which has been designed with the aid of a computer from a data file of the computer.

A three-dimensional article can be constructed by building up particulate matter from a unique origination seed in response to a computer data file of the design.

The particle directing beams direct and fix the location of particulate matter in accordance with a predetermined co-ordinate system and data file or co-ordinate information corresponding to the design created and generated on a computer machine.

Thus the article is designed on a computer machine which generates a data file of co-ordinate information representing these three-dimensional co-ordinates of the computer aided design. The data file co-ordinates are transferred and input to a programmed controller which controls a servo-mechanism. The servo-mechanism, in turn, controls a movable ejection head which emits an energy beam that by force of propulsion or attraction, directs particles to the co-ordinates of the three-dimensional object in a three-dimensional co-ordinate system. The physical origination seed to which the particulate matter is attracted and the object is constructed from is located in a controlled environment at the origin of the co-ordinate system. The beam may be an ejection of the particles or a droplet containing the particular matter or may be an energy beam which attracts the particulate matter already in the environment to the seed or another co-ordinate. By moving the working head or heads under control of the computer according to the co-ordinate information representing the design, a physical three-dimensional article or object may be automatically constructed and manufactured in accordance with the design as built up from the seed point.

The invention is diagrammatically illustrated by way of example in the accompanying drawings, in which:-

Figure 1 is a schematic illustration illustrating the computer aided design of a three-dimensional article and the automatic reproduction of the article in three-dimensional physical form;

Figures 2A-2C illustrate various stages of the reproduction of a three-dimensional object in a polar co-ordinate system in accordance with the method and apparatus of the invention;

Figure 3 is a perspective view illustrating a method and apparatus of an alternate embodiment of the invention;

Figure 4 is a top plan view of the apparatus and method of Figure 3 for automatically reproducing a three-dimensional article which has been designed by aid of a computer machine in accordance with the invention;

Figure 5 is a perspective view illustrating another co-ordinate system and method and apparatus for automatically reproducing a three-dimensional object which has been designed by aid of a computer machine; and

Figure 6 is a perspective view illustrating another apparatus and method for automatically reproducing a three-dimensional object which has been designed on a computer machine in accordance with the invention.

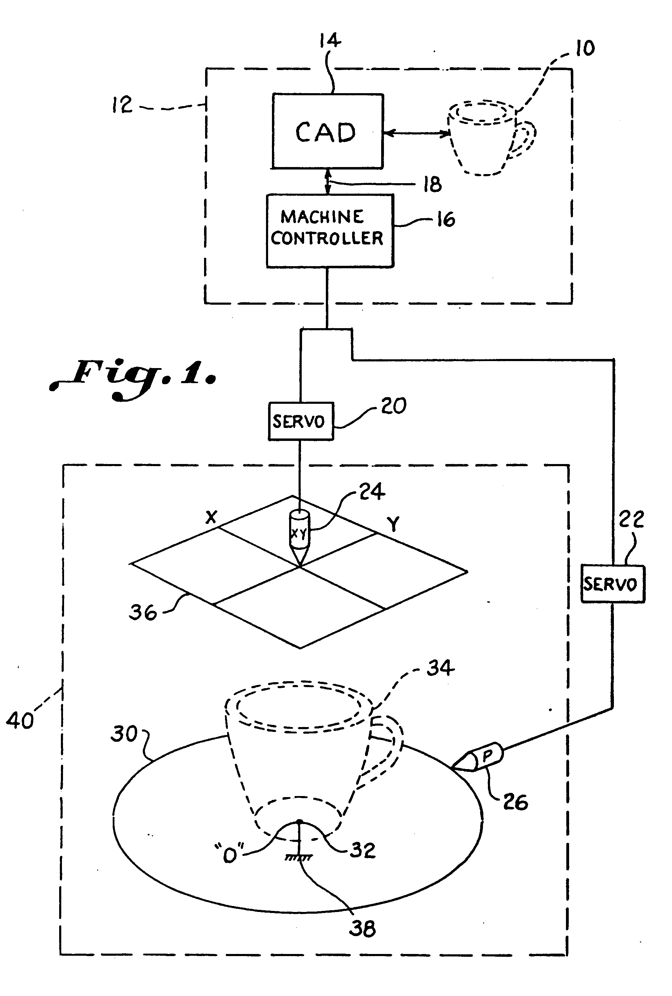

Referring to the drawings and firstly to Figure 1, an article 10 in the form of a cup is illustrated which has been designed by a computer system 12 which includes a computer machine 14 which designs the article 10 by instructions from a draftsman or designer. The computer machine 14 may be a machine such as utilized in computer aided design.

In a typical computer aided design (CAD) system, a designer uses a natural dialog to talk to the computer machine by way of a data tablet and keyboard. He instructs the machine to create, scale, rotate, modify, and/or label the various elements of his design or drawing. the computer machine answers by interpreting the instructions, accomplishing what is was directed to do, displaying the results on a terminal CRT screen and compiling a data file corresponding to the design produced and displayed. When the drafting and design effort is complete, the data file containing co-ordinate information corresponding to the design produced may be stored on a hard disc or other computer storage media for permanent storage.

In the method and apparatus of the invention, the data file which typically is in the form of coded binary information is transferred to a machine controller 16 which is part of the computer system 12. Any suitable computer software may be utilized to transfer this code of binary information into machine control language for input into the machine controller 16. The machine controller 16 sends signals to control a pair of servo-mechanisms 20 and 22 in much the same way that present technology uses to control robots and other machine devices. The control of the machine utilizing computers is commonly referred to as computer aided manufacturing (CAM) and a number of machines are available which may be incorporated in principle as the machine controller 16.

The computer machine 14 which designs the article and the machine controller 16 which controls the servo-mechanism in response to the data file of three-dimensional co-ordinates generated by the machine 14, may be any suitable conventionally available CAD and CAM machines. On the other hand, the computer system 12 may include an integrated computer machine which incorporates the functions of both the computer design machine and the computer machine controller as is well within the purview of one having average skill in the art.

The servo-mechanism 20 controls by way of suitable mechanical linkages a working head 24 which may by any suitable ejection head having an ejection nozzle for emitting small mass particles or droplets of particulate matter. A second working head 26, again a suitable ejection head, is controlled by the servo-mechanism 22. Any suitable conventional servomotor and motion transmission mechanism may be employed for moving the working heads 24 and 26. For example, electrical servo motors may be employed in the servo-mechanisms 20, 22 which are controlled by electrical signals from the machine controller 16. In turn, the electrical servo motors control the position of the working ejection heads 24 and 26.

As illustrated, the spatial system for reproducing the article in three-dimensions is illustrated generally in the form of a polar co-ordinate system having a polar plane 30 in which the ejection head of the working head 26 moves in a circular path around the origin zero of the co-ordinate system, at which origin zero a physical or origination seed 32 is located. The origination seed 32 is at the point about which the physical construction of the article 10 begins as will be more fully explained hereinafter. The head 26 can move radially as well as vertically up and down in the polar plane 30.

Spaced above the polar plane 30 is an X-Y co-ordinate plane 36, parallel to the polar plane 30, in which the ejection head of the working head 24 moves according to X and Y co-ordinates. The head 24 is moved by the servo-mechanism 20 in accordance with the three-dimensional co-ordinates of a data file 18 generated in response to the computer design of the article 10 and transferred to the machine controller. It is to be understood that the article 10 is designed in the same co-ordinate system as an article 36 is reconstructed in, as is well within the purview of one having average skill in the computer arts after having been taught the method and apparatus of the invention.

The origination seed 32 is fixed by means of any suitable structure at a position 38 within a controlled environment denoted 40. The nature of the controlled environment 40 will be dictated by the type of particulate matter which is utilized to construct the physical article 34. For example, the mass particles may be ceramic material and the controlled environment will contain an atmosphere which is heated to a desired temperature. The mass particles will be directed to the co-ordinates of the three-dimensional article as designed and stored in the data file 18. The ceramic particles will impinge and adhere first of all to the origination seed 32 and then when impinged against one another at the co-ordinates of the article 34. Subsequent particles will adhere to one another and build up the article in accordance with the three-dimensional co-ordinates contained in the data file 18 and the program contained in the machine controller 16. A program for reproducing the articles may be any suitable software developed in accordance with current know-how and well within the purview of one skilled in the art.

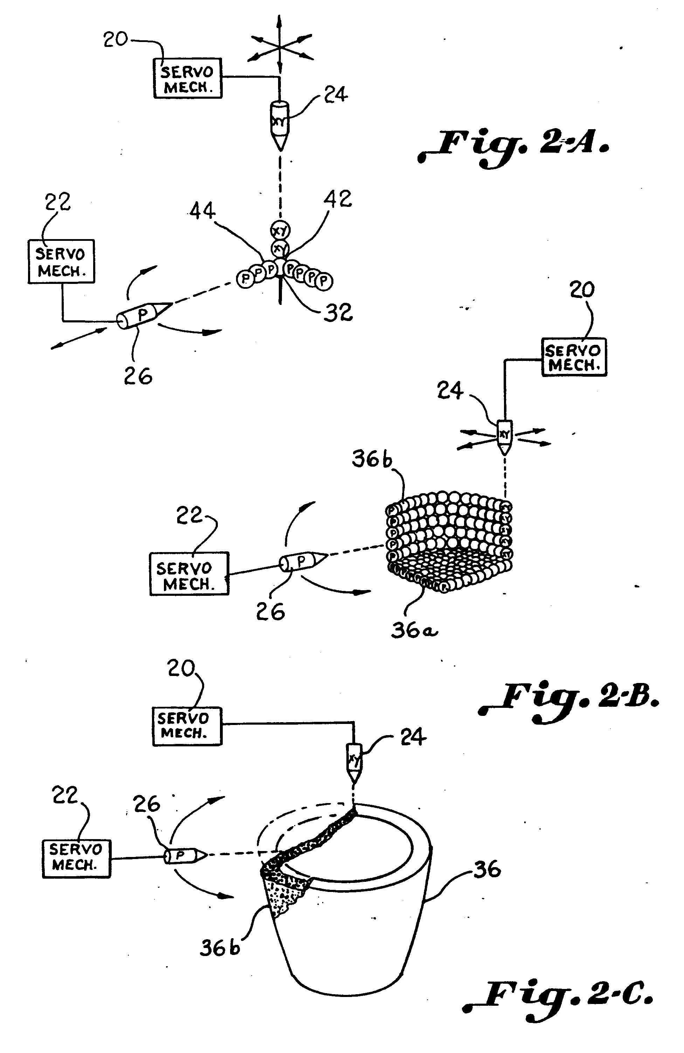

Referring now to Figures 2A-2C, the construction of the three-dimensional article 34 which has been designed with the aid of a computer machine in three-dimensions is illustrate at different stages of the construction. As illustrated in Figure 2A, a first particle 42 will be directed to the origination seed 32 and will impinge and adhere to the origination seed 32. The first particle 42 may come from the X-Y head 24 so that it impinges directly on top of the origination seed 32. The second and subsequent articles may be emitted in any number of combinations from the heads 24 and 26 in accordance with control provided by the machine controller 16 to make a base 36a for a cup wall 36b. For example, a second particle 44 may be ejected from the working head directly onto the particle 42 and join therewith by any means of physical adhesion or bonding. Figure 2B shows the article 34 after the base 36a has been partially formed and the side wall 36b is starting to be constructed. Figure 2C shows a final stage of the article 36 being constructed with the cup wall 36b almost completed.

It is to be understood that other material systems may also be utilized out of which a physical article may be constructed. For example, a plastics material may be utilzied in an ionized atmosphere, for example, as in the existing technology of electrostatic painting. Additional adhesives may be utilized to adhere the particles together or they may fuse together by means of their chemical properties. A slurry material may be utilized having water content and the controlled atmosphere may include a closed environment which is cooled to a sub-zero temperature so that the particles will freeze upon impact with one another and the origination seed.

The heads 24, 26 may eject an energy beam in the form of the particles to the co-ordinates for impingement and adhesion with one another or the beams may attract the particles to the co-ordinates for impingement and adherence to one another. For example, two or more working heads may be utilized which emit directional energy beams which intersect each other at intersection points. The beams will be controlled in accordance with the servo-mechanisms 20, 22 and the machine controller so that the intersection points lie at the co-ordinate points of the three-dimensional object being constructed. The energy beams may be electromagnetic beams and the closed environment may contain magnetized particles which are attracted at the points of intersection of the electromagnetic beams. In another system, the working heads may be laser guns which emit laser beams that intersect one another and at the points of intersection create sufficient heat to fuse particles in the closed atmosphere of a controlled environment such that the particles fuse together at the co-ordinates.

The origination seed 32 may be any suitable material, for example, a metal, such as steel, or ceramic material in the case of a ceramic system. In the case of the slurry and laser systems, a metal material will probably be most advantageous. In the case of an ion system of electrostatic attraction, a metal or plastics material is preferred for example, and in a magnetic system, a metal material may be used.

In all of the above chemical and mechanical systems, the control of the working heads to direct the particles to the co-ordinates for impingement and adherence with one another would be well within the purview of one skilled in the computer and control art.

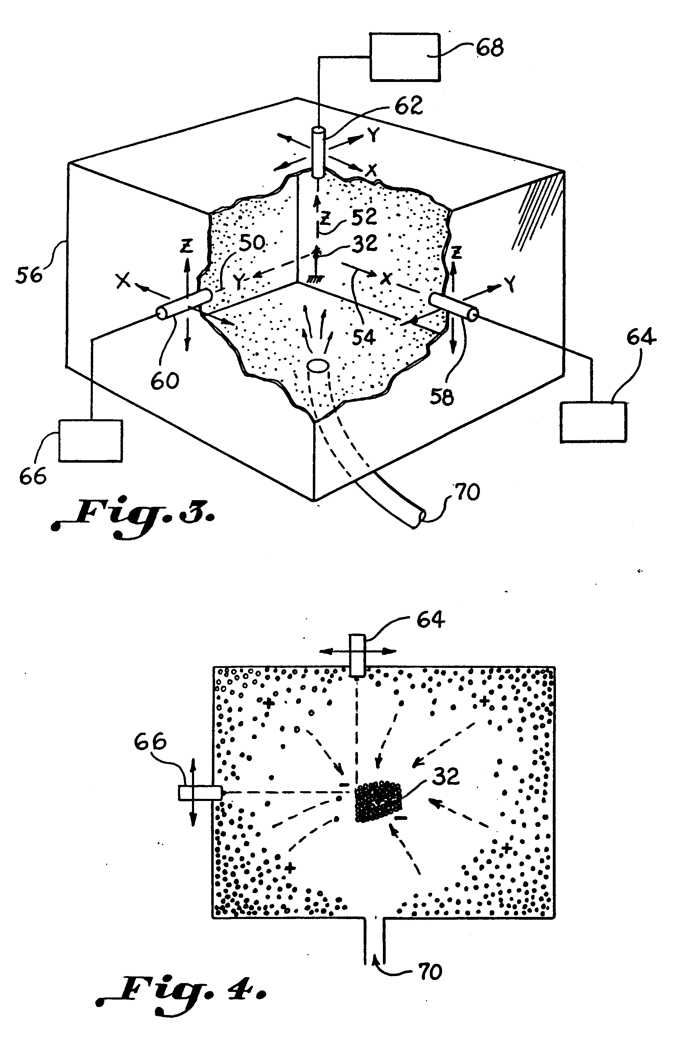

Figures 3 and 4 illustrate a system having a plurality of directional means for emitting a plurality of directional beams 50, 52, and 54. There is a chamber 56 which provides a controlled environment in which the origination seed 32 is fixed. The directional means are provided by three working heads 58, 60, and 62 which are controlled by servo-mechanisms 64, 66, 68, respectively. The servomotors of the servo-mechanisms are controlled by the programmed controller 16. The working heads 58, 60, 62 may be moved in their respective planes to produce intersecting beams having intersecting points at the desired co-ordinates which are illustrated as desired co-ordinates. The co-ordinate system illustrated in Figures 3 and 4 is that of a standard cartesian co-ordinate system having X, Y, Z axis. The controlled environment 40 is controlled through a connection 70. In this case, the article 10 is created in the cartesian co-ordinate system by the computer machine 14 and the data file 18 contains a file of three-dimensional co-ordinates in the cartesian co-ordinate system. The origination seed 32 is at the origin of the co-ordinate system.

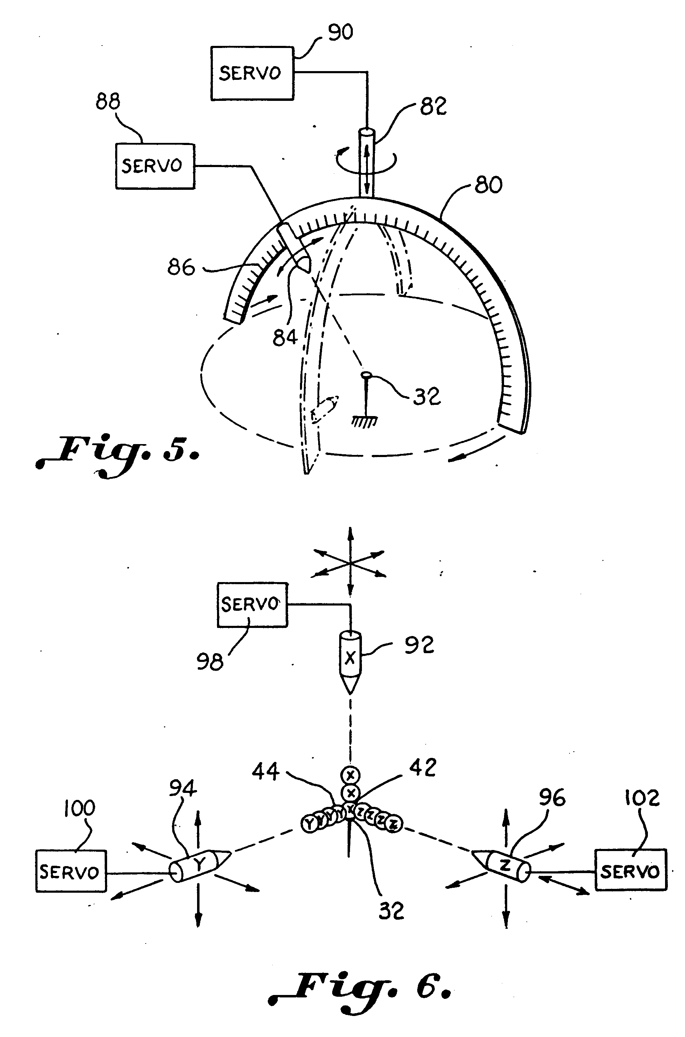

Figure 5 illustrates an alternate embodiment of apparatus for directing particulate matter in accordance with predetermined three-dimensional co-ordinates for constructing a three-dimensional article. In Figure 5, an arcuate support 80 is provided which covers a 180 degree arc. The arcuate support 80 is rotatable about an axis 82 through 360 degrees of movement about the origination seed 32. A working head 84 is slidably carried on an arcuate track 86 of the arcuate support 80. The working head 84 may be moved by any suitable conventional servo-control mechanism 88 which, in turn, is controlled by the machine controller 16. In this case, only a single working head is needed for building up and constructing a three-dimensional article from the origination seed 32. The rotation of the support 80 is controlled by a suitable servo 90 which may also be controlled by the machine controller 16. The working head 84 emits an energy beam which propels the particles towards the co-ordinates where they impinge and adhere to one another as explained heretofore.

Figure 6 illustrates three working heads, 92, 94, and 96 in a cartesian co-ordinate system for ejecting particulate matter in yet another system which is similar to the system and method of Figures 4 and 5 and wherein intersecting energy beams are utilized to locate the particulate matter at the X, Y, Z co-ordinates. Servos 98, 100, and 102 direct the working heads 92, 94, and 96, respectively, in accordance with the three-dimension co-ordinate file (X, Y, Z) representing the designed article.

While different mechanical systems have been described above for directing the particles to the three-dimensional co-ordinates which correspond to the three-dimensional design of an article being constructed, it is to be understood that other methods for directional control of particles may also be utilized. For example, it is known in the art of ink jet printing to control the direction and final destination of droplets by using charged particles which are electrostatically deflected to a desired point or co-ordinate. It is contemplated that any of the principles of particle directing as carried out in these arts may also be compatible with the methods and goals heretofore described, and that having been taught the method and apparatus of the invention, one of average skill in the art may readily apply these principles. Patent Specifications US-A-4 400 705 and 4 408 211 illustrate ink jet devices and methods and apparatus for directing ink droplets to a desired point.

Regardless of the electro/mechanical and co-ordinate system used, it is desired that the distance of the working heads from the target, each co-ordinate point, be kept uniform so that the particles impact each other at the co-ordinate points with uniform force. This prevents or reduces distortion of the shape of the three-dimensional design. This may be done by programming this function into the machine controller program as is well within the skill of a computer programmer.

## Claims

1. A method for reproducing in three dimensions an article design (10) in two dimensions to form an article (34), comprising the steps of generating on a computer machine (14) a data file (18) of three-dimensional co-ordinates of the article design (10) representing the three-dimensional design co-ordinate of the article design (10) in a co-ordinate system within an environment (40) in which the article design (10) can be reproduced, characterised by;

providing an origination seed particle (32) in the environment (40) which serves as a nucleus for the article (34) to be built upon in three dimensions and represents a point of origin in the co-ordinate system;

providing a source of mass particles;

directing particles (42, 44) from the source to co-ordinates around the origination seed particle (32) in the co-ordinate system within the environment (40) according to the three-dimensional co-ordinates of the article design (10) on the computer machine (14);

positioning the particles (42, 44) at the co-ordinates; and

joining the particles (42, 44) to one another at the co-ordinates to build up and form the article (34) in three dimensions about the origination seed particle (32).

2. A method according to claim 1, including the step of pushing the mass particles towards the co-ordinates in the co-ordinate system within the environment (40) for directing the particles to the co-ordinates.

3. A method according to claim 1, including the step of pulling the mass particles to the co-ordinates in the co-ordinate system within the environment (40) and positioning the particles at the co-ordinates.

4. A method according to claim 1, including the step of controlling the impact force of the mass particles so that the particles impinge upon each other at the co-ordinates with a uniform force for controlled adherence with one another and low design distortion.

5. A method according to claim 1, including the step of utilizing electromagnetic force to direct the mass particles towards the co-ordinates.

6. A method according to claim 1, including the step of utilizing magnetic force to direct the mass particles towards the co-ordinates.

7. A method according to claim 1, including the step of providing a controlled charge energy beam (50, 52, 54) to direct the mass particles towards the co-ordinates in the co-ordinate system within the environment (40).

8. A method according to claim 1, including the steps of;

intersecting a pair of energy beams at points of intersection within the environment (40) corresponding to the three-dimensional co-ordinates of the design (10) of the article in the computer machine (14); and

utilizing forces produced by the intersecting beams at the points of intersection to locate and join the particles at the co-ordinates in the co-ordinate system within the environment (40).

9. A method according to claim 1, including the steps of:

providing a servo-mechanism (20, 22, 64, 66, 68; 98, 100, 102) having a movable working head (24, 26; 58, 60, 62; 92, 94, 96);

providing a computer programmed controller (16) to control the servo-mechanism and the movement and position of the working head (24, 26; 58, 60, 62; 92, 94, 96);

transferring co-ordinate information from the data file (18) to the programmed controller (16) to control the working head (24, 26; 58, 60, 62; 92, 94, 96) in response to said co-ordinate information;

emitting a directional energy beam (50, 52, 54) from the working head (24, 26; 58, 60, 62; 92, 94, 96) to direct movement of the mass particles (42, 44) in the co-ordinate system within the environment (40); and controlling the servo-mechanism to position the working head (24, 26; 58, 60, 62; 92, 94, 96) in response to the co-ordinate information to direct the mass particles (42, 44) to the three-dimensional design co-ordinates of the article in the co-ordinate system with the environment (40).

10. A method according to claim 9, including the steps of:

providing at least one further working head (24, 26; 58, 60, 62; 92, 96) with each of the working heads (24, 26; 58, 60, 62; 92, 96) emitting an energy beam;

intersection the beams at points of intersection within the environment (40) corresponding to the three-dimensional co-ordinates of the design (10) of the article on the computer machine (14) to locate the particles at the co-ordinates of the article within the environment (40); and positioning and joining the particles at the co-ordinates of intersections within the environment (40) by forces created by the intersection beams at the co-ordinates of intersection.

11. A method according to claim 1, wherein the mass particles (42, 44) are a ceramic material and the environment (40) is a closed environment heated or cooled to a desired temperature.

12. A method according to claim 1, wherein the mass particles (42, 44) include a plastics material and the environment (40) includes an ionized atmosphere.

13. A method according to claim 1, wherein the mass particles (42, 44) includes a slurry material with a high water content and the environment (40) includes a close environment cooled to a sub-zero temperature.

14. A method according to claim 1, including the step of maintaining a uniform distance between the working head (24, 26; 58, 60, 62; 92, 96) and the co-ordinates within the environment (40) when the particles are directed to respective co-ordinates so that the particles (42, 44) impact each other at the co-ordinates with uniform force to reduce distortion of the three-dimensional design shape of the article (34).

15. Manufacturing apparatus for reproducing a physical three-dimensional article (34) from a data file (18) generated on a computer machine (14) on which an article design (10) for the article (34) was designed in two dimensions comprising:
    the data file (18) which includes three-dimensional co-ordinate information of the design co-ordinates of the article design (10) which corresponds to three-dimensional co-ordinates of the article (34) to be reproduced in a three-dimensional co-ordinate system within an environment (40), characterised by;
    a physical origination seed particle (32) which serves as a nucleus for the physical article (34) to be built upon according to co-ordinate information in the data file (18) and is represented by a point of origin of the three-dimensional co-ordinate systems;
    means to locate the origination seed particle (32) in the environment (40) at the origin of the co-ordinate system;
    a source of mass particles;
    directional means to direct said mass particles (42, 44) from the source to the co-ordinates corresponding to the design (10) of the article in the co-ordinate system within the environment (40);
    control means to control the directional means in response to the co-ordinate information in the data file (18); and
    means for physically joining the mass particles (42, 44) together at the co-ordinates within the environment (40) to construct the article (34) in three-dimensions about the origination seed particle (32).

16. Apparatus according to claim 15, wherein the directional means includes an ejection head (58, 60, 62) for emitting and directing droplets of the mass particles (42, 44) to the co-ordinates in the co-ordinate system within the environment (40).

17. Apparatus according to claim 15, wherein the directional means includes a pair of working heads (24, 26; 58, 60, 62; 92, 94, 96) each of which emits a controlled energy beam, and
    the working heads (24, 26; 58, 60, 62; 92, 94, 96) are disposed relative to the co-ordinate system within the environment (40) such that the energy beams intersect each other at intersection points corresponding to the co-ordinates of the article design (10) to locate the mass particles at the co-ordinates or the article (34) to be reproduced.

18. Manufacturing apparatus according to claim 15, wherein:
    the directional means includes at least one working head (24, 26; 58, 60, 62; 92, 94, 96) to emit a controlled energy beam which directs the mass particles (42, 44) to the co-ordinates of the article (34) to be reproduced within the environment (40);
    servo means (20, 22; 64, 66, 68; 98, 100, 102) are provided to move the working head (24, 26; 58, 60, 62; 92, 94, 96) and
    programmed controller means (16) are provided to control the servo means in response to the co-ordinate information in the data file (18) to move and position the working head (24, 26; 58, 60, 62; 92, 94, 96) to direct the mass of particles (42, 44) to the three-dimensional co-ordinates of the article (34) to be reproduced within the environment (40).

19. Manufacturing apparatus according to claim 18, including means for controlling the servo means (20, 22; 64, 66, 68; 98, 100, 102) to move the or each working head (24, 26; 58, 60, 62; 92, 94, 96) toward and away from the co-ordinates within the environment (40) in order to maintain a uniform distance between the or each working head (24, 26; 58, 60, 62; 92, 94, 96) and a target co-ordinate so that the particles impinge upon each other at the co-ordinate within the environment (40) with uniform force for low design shape distortion.

**20.** Manufacturing apparatus according to claim 15, in which;

the three-dimensional co-ordinate systems are polar co-ordinate systems; and wherein

the directional means for directing the mass particles includes a first directional ejection head (26) emitting a directional beam in a polar plane (30) of the polar co-ordinate system within the environment (40); a second directional ejection head (24) is carried spaced from the polar plane (30) for directing an energy beam toward the polar plane (30); and

servo means (22, 20) are provided to control movement of the first hand second ejection heads.

**21.** Manufacturing apparatus according to claim 15, wherein said directional means includes;

an arcuate support (80);

means (90) for rotating the arcuate support (80) in 360 degrees of freedom; and

an ejection head (84) carried by the arcuate support (80) movable in 180 degrees of freedom to emit energy beam.

**22.** Manufacturing apparatus according to claim 15, including a closed chamber; and wherein

the directional means is carried in the closed chamber to emit a plurality of directional energy beams;

the source of mass particles is contained within the chamber;

the origination seed (32) is disposed within the chamber; and

means are provided to control the directional beams to intersect at desired intersection points corresponding to the co-ordinates of the article design (10) to attract the particles at the intersection points and join the particles together at the co-ordinates of the article (34) to be reproduced.

**Revendications**

**1.** Procédé pour reproduire en trois dimensions un dessin (10) d'article en deux dimensions pour former un article (34),

comprenant les phases consistant à créer sur un ordinateur (14) un fichier de données (18) des coordonnées tridimensionnelles du dessin (10) de l'article représentant les coordonnées de dessin tridimensionnelles du dessin (10) de l'article dans un système de coordonnées au sein d'un environnement (40) dans lequel le dessin de l'article (10) peut être reproduit, caractérisé en ce que :

on dispose une particule de germe (32) dans l'environnement (40), servant de noyau pour l'article (34) à construire en trois dimensions et constituant un point d'origine dans le système de coordonnées;

on dispose une source de particules de masse;

on dirige des particules (42, 44) sont dirigées de la source à des coordonnées autour de la particule de germe (32) dans le système de coordonnées au sein de l'environnement (40) d'après les coordonnées tridimensionnelles du dessin (10) de l'article sur l'ordinateur (14);

on positionne les particules (42, 44) aux coordonnées; et

on relie les particules (42, 44) les unes aux autres aux coordonnées pour construire et former l'article (34) en trois dimensions autour de la particule de germe (32).

**2.** Procédé selon la revendication 1, comprenant la phase consistant à pousser les particules de masse vers les coordonnées dans le système de coordonnées au sein de l'environnement (40) pour diriger les particules vers les coordonnées.

**3.** Procédé selon la revendication 1, comprenant la phase consistant à tirer les particules de masse vers les coordonnées dans le système de coordonnées au sein de l'environnement (40) et à positionner les particules aux coordonnées.

**4.** Procédé selon la revendication 1, comprenant la phase consistant à contrôler la force d'impact des particules de masse afin que les particules se heurtent les unes aux autres aux coordonnées avec une force uniforme pour une adhérence les unes aux autres contrôlée et une faible déformation du dessin.

**5.** Procédé selon la revendication 1, comprenant la phase consistant à utiliser une force électromagnétique pour diriger les particules de masse vers les coordonnées.

**6.** Procédé selon la revendication 1, comprenant la phase consistant à utiliser une force magnétique pour diriger les particules de masse vers les coordonnées.

**7.** Procédé selon la revendication 1, comprenant la phase consistant à prévoir un faisceau d'énergie à charge contrôlée (50, 52, 54) pour diriger les particules de masse vers les coordonnées dans le système de coordonnées au sein de l'environnement (40).

8. Procédé selon la revendication 1, comprenant les phases consistant à :

faire se croiser une paire de faisceaux d'énergie à des points d'intersection au sein de l'environnement (40) correspondant aux coordonnées tridimensionnelles du dessin (10) de l'article dans l'ordinateur (14); et

utiliser les forces produites par les faisceaux se croisant aux points d'intersection pour positionner et relier les particules aux coordonnées dans le système de coordonnées au sein de l'environnement (40).

9. Procédé selon la revendication 1, comprenant les phases consistant à :

disposer d'un servomécanisme (20, 22, 64, 66, 68; 98, 100, 102) comportant une tête de travail mobile (24, 26; 58, 60, 62; 92, 94, 96);

disposer d'un contrôleur programmé par ordinateur (16) pour commander le servomécanisme et le mouvement et la position de la tête de travail (24, 26; 58, 60, 62; 92, 94, 96);

transférer les informations sur les coordonnées du fichier de données (18) au contrôleur programmé (16) pour commander la tête de travail (24, 26; 58, 60, 62; 92, 94, 96) en réponse auxdites informations sur les coordonnées;

émettre un faisceau d'énergie directionnel (50, 52, 54) depuis la tête de travail (24, 26; 58, 60, 62; 92, 94, 96) pour diriger le mouvement des particules de masse (42, 44) dans le système de coordonnées au sein de l'environnement (40); et commander le servomécanisme pour positionner la tête de travail (24, 26; 58, 60, 62; 92, 94, 96) en réponse aux informations sur les coordonnées pour diriger les particules de masse (42, 44) vers les coordonnées de dessin en trois dimensions de l'article dans le système de coordonnées au sein de l'environnement (40).

10. Procédé selon la revendication 1, comprenant les phases consistant à :

disposer d'au moins une tête de travail (24, 26; 58, 60, 62; 92, 96) supplémentaire, chacune des têtes de travail (24, 26; 58, 60, 62; 92, 96) émettant un faisceau d'énergie;

faire se croiser les faisceaux aux points d'intersection au sein de l'environnement (40) correspondant aux coordonnées tridimensionnelles du dessin (10) de l'article sur l'ordinateur (14) pour placer les particules aux coordonnées de l'article au sein de l'environnement (40); et positionner et relier les particules aux coordonnées des intersections au sein de l'environnement (40) au moyen des forces produites par les faisceaux se croisant aux coordonnées d'intersection.

11. Procédé selon la revendication 1, dans lequel les particules de masse (42, 44) sont une matière céramique et l'environnement (40) est un environnement fermé, chauffé ou refroidi à une température souhaitée.

12. Procédé selon la revendication 1, dans lequel les particules de masse (42, 44) comprennent une matière plastique et l'environnement (40) renferme une atmosphère ionisée.

13. Procédé selon la revendication 1, dans lequel les particules de masse (42, 44) comprennent une bouillie à forte teneur en eau et l'environnement (40) est un environnement fermé, refroidi à une température inférieure à zéro.

14. Procédé selon la revendication 1, comprenant la phase consistant à garder une distance constante entre la tête de travail (24, 26; 58, 60, 62; 92, 96) et les coordonnées au sein de l'environnement (40) lorsque les particules sont dirigées vers des coordonnées respectives de manière que les particules de masse (42, 44) se heurtent les unes aux autres aux coordonnées avec une force uniforme pour réduire la déformation du dessin tridimensionnel de l'article (34).

15. Dispositif de fabrication pour reproduire un article tridimensionnel physique (34) à partir d'un fichier de données (18) créé sur un ordinateur (14) où un dessin (10) d'article pour l'article (34) a été réalisé en deux dimensions comprenant :

le fichier de données (18) qui comprend les informations sur les coordonnées tridimensionnelles des coordonnées de dessin du dessin (10) de l'article qui correspondent aux coordonnées tridimensionnelles de l'article (34) à reproduire dans un système de coordonnées tridimensionnelles au sein d'un environnement (40), caractérisé par :

une particule de germe physique (32) qui sert de noyau pour l'article physique (34) à construire d'après les informations sur les coordonnées dans le fichier de données (18) et est représentée par un point d'origine du système de coordonnées tridimensionnelles;

un moyen pour placer la particule de germe (32) dans l'environnement (40) à l'origine du système de coordonnées;

une source de particules de masse;

un moyen directionnel pour diriger lesdites particules de masse (42, 44) de la source aux coordonnées correspondant au dessin (10) de l'article dans le système de coordonnées au sein de l'environnement (40);

un moyen de commande pour commander le moyen directionnel en réponse aux informations sur les coordonnées dans le fichier de données (18); et

un moyen pour relier physiquement les particules de masse (42, 44) les unes aux autres aux coordonnées au sein de l'environnement (40) pour construire l'article (34) en trois dimensions autour de la particule de germe (32).

16. Dispositif de fabrication selon la revendication 15, dans lequel le moyen directionnel comprend une tête d'éjection (58, 60, 62) pour émettre et diriger des gouttelettes des particules de masse (42, 44) jusqu'aux coordonnées dans le système de coordonnées au sein de l'environnement (40).

17. Dispositif de fabrication selon la revendication 15, dans lequel le moyen directionnel comprend une paire de têtes de travail (24, 26; 58, 60, 62; 92, 94, 96), chacune d'elle émettant un faisceau d'énergie contrôlée, et

les têtes de travail (24, 26; 58, 60, 62; 92, 94, 96) sont disposées relativement au système de coordonnées au sein de l'environnement (40) de manière que les faisceaux d'énergie se croisent en des points d'intersection correspondant aux coordonnées du dessin (10) de l'article pour placer les particules de masse aux coordonnées de l'article (34) à reproduire.

18. Dispositif de fabrication selon la revendication 15, dans lequel :

le moyen directionnel comprend au moins une tête de travail (24, 26; 58, 60, 62; 92, 94, 96) pour émettre un faisceau d'énergie contrôlée qui dirige les particules de masse (42, 44) jusqu'aux coordonnées de l'article (34) à reproduire au sein de l'environnement (40);

les servomécanismes (20, 22, 64, 66, 68; 98, 100, 102) servent à déplacer la tête de travail (24, 26; 58, 60, 62; 92, 94, 96) et

le contrôleur programmé (16) sert à commander les servomécanismes en réponse aux informations sur les coordonnées dans le fichier de données (18) pour déplacer et positionner la tête de travail (24, 26; 58, 60, 62; 92, 94, 96) afin de diriger les particules de masse (42, 44) jusqu'aux coordonnées tridimensionnelles de l'article (34) à reproduire au sein de l'environnement (40).

19. Dispositif de fabrication selon la revendication 18, comprenant un moyen pour commander les servomécanismes (20, 22, 64, 66, 68; 98, 100, 102) afin de rapprocher et d'éloigner la tête de travail (24, 26; 58, 60, 62; 92, 94, 96) ou chaque tête de travail des coordonnées au sein de l'environnement (40) de manière à garder une distance constante entre la tête de travail (24, 26; 58, 60, 62; 92, 94, 96) ou chaque tête de travail et une coordonnée cible pour que les particules se heurtent les unes aux autres à la coordonnée au sein de l'environnement (40) avec une force uniforme pour une déformation minimale du dessin.

20. Dispositif de fabrication selon la revendication 15, dans lequel :

les systèmes de coordonnées tridimensionnelles sont des systèmes de coordonnées polaires; et dans lequel

le moyen directionnel pour diriger les particules de masse comprend une première tête d'éjection directionnelle (26) émettant un faisceau directionnel dans un plan polaire (30) du système de coordonnées polaires au sein de l'environnement (40); une seconde tête d'éjection directionnelle (24) est supportée en étant espacée du plan polaire (30) pour diriger un faisceau d'énergie vers le plan polaire (30); et

un servomécanisme (22, 20) est destiné à commander le déplacement de la première et de la seconde tête d'éjection.

21. Dispositif de fabrication selon la revendication 15, dans lequel ledit moyen directionnel comprend :

un support arqué (80);

un moyen (90) pour faire tourner le support arqué (80) sur 360 degrés de liberté; et

une tête d'éjection (84) supportée par le support arqué (80) mobile sur 180 degrés de liberté pour émettre un faisceau d'énergie.

22. Dispositif de fabrication selon la revendication 15, comprenant une chambre fermée; et dans lequel

le moyen directionnel est supporté dans la chambre fermée pour émettre une pluralité de faisceaux d'énergie directionnels;

la source de particules de masse est contenue au sein de la chambre;

la particule de germe (32) est disposée au sein de la chambre; et

des moyens sont prévus pour commander les faisceaux directionnels pour qu'ils se croisent en des points d'intersection souhaités correspondant aux coordonnées du dessin (10) de l'article afin d'attirer les particules aux points d'intersection et de relier les particules les unes aux autres aux coordonnées de l'article (34) à reproduire.

**Patentansprüche**

1. Verfahren zur dreidimensionalen Wiedergabe einer Artikelgestaltung (10) in zwei Dimensionen zur Bildung eines Gegenstandes (34),

   wobei auf einem Computer (14) eine Datei (18) dreidimensionaler Koordinaten der Artikelgestaltung (10) erzeugt wird, welche die dreidimensionalen Gestaltungskoordinaten der Artikelgestaltung (10) in einem Koordinatensystem in einer Umgebung (40) repräsentieren, in welcher die Artikelgestaltung (10) wiedergegeben werden kann, gekennzeichnet durch:

   Schaffung eines Ursprungskeimteilchens (32) in der Umgebung (40), welches als ein Kern für den Artikel (34) dient, der in drei Dimensionen aufzubauen ist, und einen Ursprungspunkt in dem Koordinatensystem darstellt;

   Schaffung einer Quelle von Masseteilchen;

   Lenken der Teilchen (42, 44) von der Quelle zu Koordinaten rund um das Ursprungskeimteilchen (32) in dem Koordinatensystem innerhalb der Umgebung (40) entsprechend den dreidimensionalen Koordinaten der Artikelgestaltung (10) auf dem Computer (14);

   Anordnung der Teilchen (42, 44) an den Koordinaten; und

   Verbinden der Teilchen (42, 44) miteinander an den Koordinaten, um den Artikel (34) in drei Dimensionen um das Ursprungskeimteilchen (32) aufzubauen und zu formen.

2. Verfahren nach Anspruch 1, wobei die Masseteilchen gegen die Koordinaten in dem Koordinatensystem in der Umgebung (40) gestoßen werden, um die Teilchen zu den Koordinaten zu lenken.

3. Verfahren nach Anspruch 1, wobei die Masseteilchen zu den Koordinaten in dem Koordinatensystem in der Umgebung (40) gezogen werden und die Teilchen an den Koordinaten angeordnet werden.

4. Verfahren nach Anspruch 1, wobei die Aufprallkraft der Masseteilchen so gesteuert wird, daß die Teilchen mit einer gleichmäßigen Kraft an den Koordinaten aufeinander auftreffen, für eine gesteuerte Haftung aneinander und geringe Gestaltungsverzerrung.

5. Verfahren nach Anspruch 1 wobei eine elektromagnetische Kraft verwendet wird, um die Masseteilchen zu den Koordinaten zu lenken.

6. Verfahren nach Anspruch 1, wobei eine magentische Kraft verwendet wird, um die Masseteilchen zu den Koordinaten zu lenken.

7. Verfahren nach Anspruch 1, wobei ein Energiestrahl (50, 52, 54) mit gesteuerter Ladung vorgesehen wird, um die Masseteilchen zu den Koordinaten indem Koordinatensystem innerhalb der Umgebung (40) zu lenken.

8. Verfahren nach Anspruch 1 wobei ein Paar von Energiestrahlen an Schnittstellen innerhalb der Umgebung (40) sich entsprechend den dreidimensionalen Koordinaten der Gestaltung (10) des Artikels im Computer (14) schneiden; und

   Kräfte verwendet werden, welche durch die Schneidstrahlen an den Schneidstellen erzeugt werden, um die Teilchen an den Koordinaten in dem Koordinatensystem in der Umgebung (40) anzuordnen und zu verbinden.

9. Verfahren nach Anspruch 1, wobei ein Servomechanismus (20, 22, 64, 66, 68; 89, 100, 102) mit einem bewegbaren Arbeitskopf (24, 26; 58, 60, 62; 92, 94, 96) geschaffen wird;

   ein computerprogrammiertes Steuergerät (16) geschaffen wird, um den Servomechanismus und die Bewegung und Position des Arbeitskopfes (24, 26; 58, 60, 62; 92, 94, 96) zu steuern;

   die Koordinateninformation aus der Datei (18) zu dem programmierten Steuergerät (16) überführt wird, um den Arbeitskopf (24, 26; 58, 60, 62; 92, 94, 96) in Abhängigkeit von dieser Koordinateninformation zu steuern;

   ein gerichteter Energiestrahl (50, 52, 54) aus dem Arbeitskopf (24, 26; 58, 60, 62; 92, 94, 96) emittiert wird, um die Bewegung der Masseteilchen (42, 44) in dem Koordinatensystem in der Umgebung (40) zu lenken; und wobei der Servomechanismus gesteuert wird, um den Arbeitskopf (24, 26; 58, 60, 62; 92, 94, 96) in Abhängigkeit von der Koordinateninformation zu positionieren, um die Masseteilchen (42, 44) zu den dreidimensionalen Gestaltungskoordinaten des Artikels in dem Koordinatensystem in der Umgebung (40) zu lenken.

10. Verfahren nach Anspruch 9, wobei mindestens ein weiterer Arbeitskopf (24, 26; 58, 60, 62; 92, 96) vorgesehen wird und jeder der Arbeitsköpfe (24, 26; 58, 60, 62; 92, 96) einen Energiestrahl emittiert;

    die Strahlen an Schnittsteilen in der Umgebung (40) geschnitten werden entsprechend den dreidimensionalen Koordinaten der Gestaltung (10) des Artikels auf dem Computer (14), um die Teilchen an den Koordinaten des Artikels in der Umgebung (40) anzuordnen; und die Teilchen an den Koordinaten der Schnitte in der Umgebung (40) durch Kräfte angeordnet und verbunden werden, weiche durch die Schneidstrahlen an den Koordinaten der Schnittstelle erzeugt sind.

11. Verfahren nach Anspruch 1, wobei die Masseteilchen (42, 44) ein Keramikmaterial sind und die Umgebung (40) eine geschlossene Umgebung ist, die auf eine gewünschte Temperatur erwärmt oder gekühlt ist.

12. Verfahren nach Anspruch 1, wobei die Masseteilchen (42, 44) ein Plastikmaterial aufweisen und die Umgebung (40) eine ionisierte Atmosphäre aufweist.

13. Verfahren nach Anspruch 1, wobei die Masseteilchen (42, 44) ein Schlammaterial mit einem hohen Wassergehalt aufweisen und die Umgebung (40) eine geschlossene, auf eine Temperatur unter Null gekühlte Umgebung aufweist.

14. Verfahren nach Anspruch 1, wobei ein gleichmäßiger Abstand zwischen dem Arbeitskopf (24, 26; 58, 60, 62; 92, 96) und den Koordinaten in der Umgebung (40) aufrechterhalten wird, wenn die Teilchen auf die entsprechenden Koordinaten gelenkt werden, so daß die Teilchen (42, 44) an den Koordinaten mit gleichmäßiger Kraft aufeinanderprallen, um eine Verzerrung der dreidimensionalen Gestaltungsform des Artikels (34) zu reduzieren.

15. Herstellungsvorrichtung zur Wiedergabe eines körperlichen dreidimensionalen Artikels (34) aus einer Datei (18), die auf einem Computer (14) hergestellt ist, auf welchem eine Artikelgestaltung (10) für den Artikel (34) in zwei Dimensionen gestaltet wurde, wobei die Datei (18) eine dreidimensionale Koordinateninformation der Gestaltungskoordinaten der Artikelgestaltung (10) aufweist, welche den dreidimensionalen Koordinaten des Artikels (34) entspricht, der in einem dreidimensionalen Koordinatensystem in einer Umgebung (40) wiedergegeben werden soll, gekennzeichnet durch ein körperliches Ursprungskeimteilchen (32), das als ein Kern für den körperlichen Artikel (34) dient, der entsprechend der Koordinateninformation in der Datei aufgebaut werden soll und durch einen Ursprungspunkt des dreidimensionalen Koordinatensystems repräsentiert ist; Mittel zur Anordnung des Ursprungskeimteilchens (32) in der Umgebung (40) am Ursprung des Koordinatensystems: eine Quelle für Masseteilchen; Richtmittel, um die Masseteilchen (42, 44) aus der Quelle zu den Koordinaten zu lenken, welche der Gestaltung (10) des Artikels in dem Koordinatensystem in der Umgebung (40) entsprechen; Steuermittel, um das Richtmittel in Abhängigkeit von der Koordinateninformation in der Datei (18) zu steuern: und Mittel, um die Masseteilchen (42, 43) an den Koordinaten in der Umgebung (40) körperlich zusammen zu verbinden, um den Artikel (34) in drei Dimensionen um das Ursprungskeimteilchen (32) herum aufzubauen.

16. Vorrichtung nach Anspruch 15, wobei das Richtmittel einen Auswerferkopf (58, 60, 62) aufweist zum Emittieren und Lenken von Tröpfchen der Masseteilchen (42, 44) zu den Koordinaten in dem Koordinatensystem In der Umgebung (40).

17. Vorrichtung nach Anspruch 15, wobei das Richtmittel ein Paar von Arbeitsköpfen (24, 26; 58, 60, 62; 92, 94, 96) aufweist, deren jeder einen gesteuerten Energiestrahl emittiert, und wobei die Arbeitsköpfe (24, 26; 58, 60, 62; 92, 94, 96) relativ zu dem Koordinatensystem in der Umgebung (40) derart angeordnet sind, daß die Energiestrahlen einander an Schneidpunkten schneiden, welche den Koordinaten der Artikelgestaltung (10) entsprechen, um die Masseteilchen an den Koordinaten oder dem wiederzugebenden Artikel (34) anzuordnen.

18. Herstellungsvorrichtung nach Anspruch 15, wobei das Richtmittel mindestens einen Arbeitskopf (24, 26; 58, 60, 62; 92, 94, 96) aufweist, um einen gesteuerten Energiestrahl zu emittieren, welcher die Masseteilchen (42, 44) zu den Koordinaten des Artikels (34) lenkt, der in der Umgebung (40) zu reproduzieren ist; Servomittel (20, 22; 64, 66, 68; 98, 100, 102) vorgesehen sind, um den Arbeitskopf (24, 26; 58, 60, 62; 92, 94, 96) zu bewegen, und programmierte Steuergerätemittel (16) vorgesehen sind, um das Servomittel in Abhängigkeit von der Koordinateninformation in der Datei (18) zu steuern und den Arbeitskopf (24, 26; 58, 60, 62; 92, 94, 96) zu bewegen und anzuordnen, um die Masse der Teilchen (42, 44) zu den dreidimensionalen Koordinaten des in der Umgebung (40) zu reproduzierenden Artikels (34) zu lenken.

19. Herstellungsvorrichtung nach Anspruch 18 mit Mitteln zum Steuern des Servomittels 20, 22; 64, 66, 68; 98, 100, 102), um den oder jeden Arbeitskopf (24, 26; 58, 60, 62; 92, 94, 96) zu den Koordinaten in der Umgebung (40) hin oder von diesen fort zu bewegen, um einen gleichmäßigen Abstand zwischen dem oder jedem Arbeitskopf (24, 26; 58, 60, 62; 92, 94, 96) und einer Targetkoordinate aufrechtzuhalten, so daß die Teilchen an der Koordinate in der Umgebung (40) mit gleichmäßiger Kraft für eine geringe Gestaltungsformverzerrung aufeinander auftreffen.

20. Herstellungsvorrichtung nach Anspruch 15, wobei die dreidimensionalen Koordinatensysteme Polarkoordinatensysteme sind; und wobei

das Richtmittel zum Lenken der Masseteilchen einen ersten Lenkauswerfkopf (26) aufweist, weicher einen Direktionsstrahl in einer polaren Ebene (30) des Polarkoordinatensystems in der Umgebung (40) emittiert;

ein zweiter Lenkauswerfkopf (24) im Abstand von der polaren Ebene (30) getragen wird, um einen Energiestrahl zu der polaren Ebene (30) zu lenken; und

Servormittel (22, 20) vorgesehen sind, um die Bewegung des ersten und zweiten Auswerfkopfes zu steuern.

21. Herstellungsvorrichtung nach Anspruch 15, wobei das Richtmittel aufweist:

eine bogenförmige Halterung (80);

Mittel (90) zum Drehen der bogenförmigen Halterung (80) in 360 Freiheitsgraden; und

einen Auswenkopf (84), der von der bogenförmigen Halterung (80) getragen ist, die in 180 Freiheitsgraden bewegbar ist, um einen Energiestrahl zu emittieren.

22. Herstellungsvorrichtung nach Anspruch 15, mit einergeschlossenen Kammer, wobei

das Richtmittel in der geschlossenen Kammer getragen wird, um eine Vielzahl von Richtenergiestrahlen zu emittieren;

die Quelle der Masseteilchen in der Kammer enthalten ist;

der Ursprungskeim (32) in der Kammer angeordnet ist; und

Mittel vorgesehen sind, um die Richtstrahlen zu steuern, so daß sie sich angewünschten Schneidstellen schneiden entsprechend den Koordinaten der Artikelgestaltung (10), um die Teilchen an den Schnittsteilen anzuziehen und die Teilchen an den Koordinaten des zu reproduzierenden Artikels (34) miteinander zu verbinden.

Fig.1.

Fig. 2·A.

Fig. 2·B.

Fig. 2·C.

EP 0 284 674 B1

Fig. 3.

Fig. 4.

16

Fig. 5.

Fig. 6.